# EUROPEAN PATENT SPECIFICATION

(11) **EP 3 236 717 B1**
(45) Date of publication and mention of the grant of the patent: **25.01.2023**
(21) Application number: 17167294.2
(22) Date of filing: 20.04.2017
(51) Int. Cl.: H05B 47/19, H05B 47/10, G08C 23/04

(54) **METHOD, DEVICE AND SYSTEM FOR CONTROLLING SMART LIGHT**
VERFAHREN, VORRICHTUNG ZUR STEUERUNG EINES INTELLIGENTEN LICHTS
PROCÉDÉ, DISPOSITIF ET SYSTÈME PERMETTANT DE COMMANDER UNE LUMIÈRE INTELLIGENTE

(30) Priority: 20.04.2016 CN 201610248690
(43) Date of publication of application: 25.10.2017
(73) Proprietor: Beijing Xiaomi Mobile Software Co., Ltd., Beijing 100085 (CN)
(72) Inventor: FU, Qiang, BEIJING, 100085 (CN); JIA, Weiguang, BEIJING, 100085 (CN); HOU, Enxing, BEIJING, 100085 (CN)
(74) Representative: Cabinet Beau de Loménie

(56) References cited:
- WO-A1-2007/004097
- WO-A1-2009/150571
- CN-A- 104 154 467
- CN-A- 105 487 857
- US-A1- 2015 382 436

## Description

### FIELD

The present disclosure relates to computer technology field, and more particularly to methods and a system for controlling a first smart light, a terminal, and the first smart light.

### BACKGROUND

With a development of computer technology, people's life has a great convenience as to the appearance of smart devices, such as a smart air conditioner, and a smart light, and a user may control the smart devices via terminals like a cellphone and a tablet computer.

In the related art, when the user controls a smart light via a terminal, the smart light needs to intercommunicate with the terminal, and when the smart light is turned on, a device open notification will be broadcast to devices around, in which the device open notification carries a device type (i.e. a smart light) corresponding to the smart light. The terminal receives the device open notification broadcast by the smart light. A corresponding control option is displayed on an interface and the corresponding device type is displayed as a smart light. The user may control the smart light to execute a corresponding operation by operating the control option on the terminal.

In a process of realizing the present disclosure, the inventor discovers that at least following problems are existing in the related art:
when multiple smart lights are turned on simultaneously, the terminal will receive multiple device open notifications continuously; however, the device type carried in each device open notification is the smart light, and the terminal cannot display the control options of the multiple smart lights with difference, such that when a certain smart light is to be controlled, the user needs to check one-by-one to find the smart light to be controlled, thus causing the relatively low efficiency of controlling the smart light.

WO2007004097A1 discloses a device for wireless control of color of light emitted by a lighting system. The lighting system comprises signal receiving means and means for adjusting the color of light emitted from at least one lighting element, in response to a received color control signal from the device. The device for wireless control comprises means for generating color information data, said data being indicative of a desired color of light to be emitted by the lighting system, means for modulating a first carrier signal in accordance with the color information data, and means for transmitting said color control signal in the form of a beam of said first modulated carrier signal to the lighting system.

CN104154467A discloses a track lamp system capable of adjusting the color temperature based on a mobile intelligent terminal. The track lamp system comprises a microcontroller, a color temperature measuring and control unit, a wireless communication unit and a track lamp. The color temperature measuring and control unit is connected with the microcontroller and the track lamp and used for detecting the current color temperature information of the track lamp and sending the detected color temperature information to the microcontroller to be processed, the microcontroller uploads the color temperature information to the mobile intelligent terminal through the wireless communication unit and is used for receiving color temperature adjusting and control instructions issued by the mobile intelligent terminal, and therefore the color temperature of the track lamp is adjusted. The wireless communication unit is connected with the microcontroller and used for being connected with the Internet to provide wireless service. The mobile intelligent terminal serves as the control terminal, and therefore the color temperature of the track lamp is remotely and wirelessly adjusted, and a user selects configured color temperature parameters on an APP of the mobile intelligent terminal and has access to the Internet through RF, GPRS, WiFi, 3G or 4G to remotely and wirelessly adjust the color temperature of the track lamp.

US2015382436A1 discloses a networked light switch. The disclosure relates to a light switch that, in response to detecting a local input or motion, transmits a communication that causes another light switch to change a state of a light. This disclosure further relates to techniques for detecting an abnormal current draw state of an electrical device such as a lighting device are described; systems including in-wall network devices having a user-facing restore button for restoring S0l11e or all of the customizable settings to a factory default state; and techniques for controlling device operations in accordance with scenes or modes.

CN105487857A discloses a method and an apparatus for prompting an image shooting part to be started, and belongs to the technical field of computers. The method comprises: detecting a starting event of the image shooting part of a terminal device; and when it is detected that the image shooting part of the terminal device is started, controlling the terminal device to send out a preset prompt signal. With the adoption of the method and the apparatus, personal information of users can be prevented from being leaked.

WO 2009/150571 A1 discloses a user interface device and a method for controlling a light system and a consumer load by providing feed forward or feedback information facilitating an easy and intuitive use of the user interface device when controlling a light system. An input unit receives a user input; a control unit receives a signal based on the user input and generates an information signal provided to a display unit and generates a control signal for controlling the connected consumer load.

### SUMMARY

In order to solve the existing problems in the related art, the present disclosure provides a method for controlling a smart light according to Claim 1 or 2.

In this way, the first smart light may be distinguished from other smart lights.

In another embodiment, sending the control request corresponding to the target function to the first smart light includes: obtaining a network identifier inputted by a user, and sending a network access request to the first smart light, where the network access request carries the network identifier. In this way, the first smart light may be controlled to access the network.

According to embodiments of a second aspect of the present disclosure, a method for controlling a smart light according to Claim 4 is provided.

In this way, the light color of the first smart light may be changed.

In another embodiment, receiving, from the terminal, a control request corresponding to a target function and executing the target function includes: receiving, from the terminal, network access request, where the network access request carries a network identifier; and accessing to a corresponding network according to the network identifier.

In this way, the first smart light may be controlled to access the network.

According to embodiments of a third aspect of the present disclosure, a terminal according to Claim 6 or 7 is provided.

In another embodiment, the sending module is configured to: obtain a network identifier inputted by a user and send a network access request to the first smart light as the control request, where the network access request carries the network identifier.

According to embodiments of a fourth aspect of the present disclosure, a first smart light according to Claim 9 is provided.

In another embodiment, the receiving module is configured to receive, from the terminal, a network access request sent by the terminal, where the network access request carries a network identifier; and the executing module is configured to access to a corresponding network according to the network identifier.

According to embodiments of a fifth aspect of the present disclosure, a system for controlling a smart light according to Claim 11 is provided.

The technical solutions provided in the present disclosure may include the following beneficial effects.

In the present embodiments, when the first smart light is turned on, the first light color information of the first smart light is determined, the device open notification carrying the first light color information is broadcast, the device open notification broadcast by the first smart light is received, in which the device open notification carries the first light color information of the first smart light; the control option corresponding to the first smart light is displayed according to the first light color information; and when the executing instruction of the target function triggered by control option corresponding to the first smart light is received, a control request corresponding to the target function is sent to the first smart light, the control request corresponding to the target function sent by the terminal is received, and the target function is executed. In this way, when the multiple smart lights are turned on simultaneously, since the first smart light carries the first light color information in the device open notification, the device open notification may be displayed with difference by the terminal according to the first light color information, and the user may find the smart light to be controlled directly according to the color, such that the efficiency of controlling the smart light may be improved.

In summary, the present application is defined by the methods implemented in a terminal as defined in independent claims 1 and 2, the method implemented in a first smart light as defined in claim 4, the terminal as defined in independent claims 6 and 7, and the first smart light as defined in independent claim 9. Further embodiments are defined in the dependent claims.

### BRIEF DESCRIPTION OF THE DRAWINGS

The accompanying drawings, which are incorporated in and constitute a part of this specification, illustrate embodiments consistent with the invention and, together with the description, serve to explain the principles of the invention, in which:
Fig. 1 is a flow chart of a method for controlling a smart light according to an example embodiment;
Fig. 2 is a scene diagram of a method for controlling a smart light according to an example embodiment;
Fig. 3 is a schematic diagram of an interface display of a terminal according to an example embodiment;
Fig. 4 is a schematic diagram of an interface display of a terminal according to an example embodiment;
Fig. 5 is a flow chart of a method for controlling a smart light according to an example embodiment;
Fig. 6 is a flow chart of a method for controlling a smart light according to an example embodiment;
Fig. 7 is a block diagram of a terminal according to an example embodiment;
Fig. 8 is a block diagram of a terminal according to an example embodiment;
Fig. 9 is a block diagram of a terminal according to an example embodiment;
Fig. 10 is a block diagram of a first smart light according to an example embodiment;
Fig. 11 is a block diagram of a first smart light according to an example embodiment;
Fig. 12 is a block diagram of a terminal according to an example embodiment; and
Fig. 13 is a block diagram of a smart light according to an example embodiment.

Specific embodiments of the present disclosure will be described in more detail with reference to drawings hereinafter. These accompanying drawings and text description are not used to limit the scope of the present disclosure in any form, but used to explain the concept of the present disclosure to those skilled in the art with reference to specific embodiments.

### DETAILED DESCRIPTION

Referring to the following descriptions and drawings, these and other aspects of the embodiments of the present disclosure will be apparent. In these descriptions and drawings, some specific approaches of the embodiments of the present disclosure are provided, so as to show some ways to perform the principle of the embodiments of the present disclosure, however it should be understood that the embodiment of the present disclosure is not limited thereby.

According to embodiments of the present disclosure, a method for controlling a smart light is provided. The method may be realized by a terminal and a smart light together. The terminal may be a smart phone, a tablet computer, etc. A management application of a smart device may be installed in the terminal. A processor, a memory, a transceiver and the like may be set in the terminal. The processor may be used to control a process of controlling a smart light. The memory may be used to store data needed and generated in the process of controlling the smart light. The transceiver may be used to receive and transmit messages. An Input/Output device like a screen may also be set in the terminal. The screen may be used to display the management application interface of the smart device and the screen may be a touch screen. A processor, a memory, a transceiver, a light-emitting component and the like may be set in the smart light. The processor may be used to control a process of controlling a smart light. The memory may be used to store data needed and generated in the process of controlling the smart light. The transceiver may be used to receive and transmit messages. The light-emitting component may be used to emit light with a certain color and change the light color. In the present embodiments, details of the technical solution are described by taking the mobile phone as an example of the terminal, and other situations are similar to this, which shall not be elaborated herein.

Before the implementation, the user may install a management application of the smart device in the terminal, and opens the management application. The terminal is triggered to display a login interface of the management application, the user may input an account and a password in the login interface, and then click a button to confirm so as to trigger the terminal to display a main interface of the management application, such that the account may be logged in to the management application.

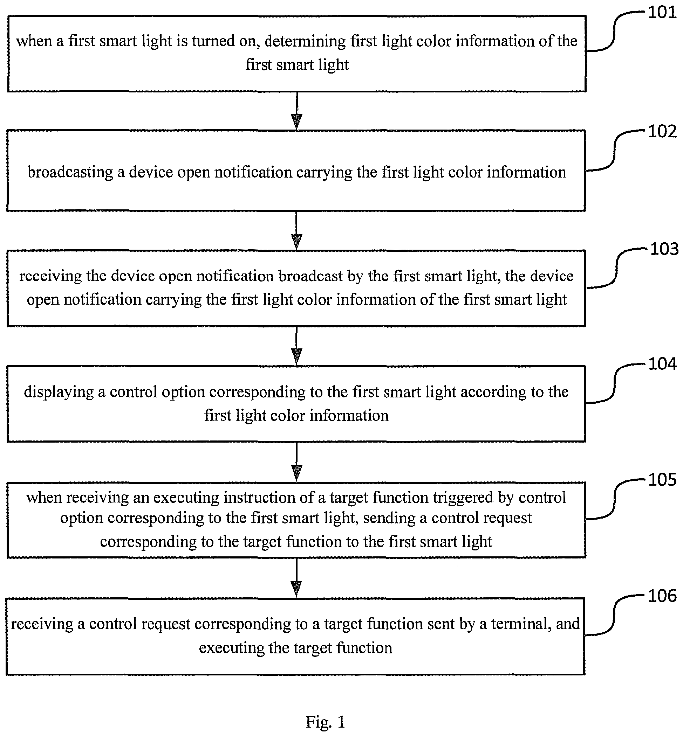

As shown in Fig. 1, the process of the method may include steps as follows.

In step 101, when the first smart light is turned on, first light color information of the first smart light is determined.

In an embodiment, when the user turns on the first smart light, i.e. the first smart light is powered on, the first smart light emits light and the first light color information at the present time may be determined. The first light color information may contain the light color of the first smart light, such as red, yellow and blue.

In step 102, a device open notification carrying the first light color information is broadcast.

In an embodiment, after determining the first light color information, the first smart light may also obtain device type information (like a smart light) of itself, address information (like MAC address) and the like, and then broadcast the device open notification to surrounding environment via a private protocol (a protocol appointed between the smart light and the terminal). The device open notification may carry the first light color information, the device type information and the address information of the first smart light.

In step 103, the device open notification broadcast by the first smart light is received, in which the device open notification carries the first light color information of the first smart light.

In an embodiment, after receiving the device open notification broadcast by the first smart light, the terminal may then analyze the device open notification and obtain the first light color information, the device type information and the address information of the first smart light.

In step 104, a control option corresponding to the first smart light is displayed according to the first light color information.

In an embodiment, the terminal specifies a light color for the first smart light. A corresponding process is: if light color information carried in a device open notification sent by another smart light is received and the light color information contains the first light color information, determining second light color information other than the light color information carried in the device open notification sent by the other smart light; sending a light color changing request to the first smart light, in which the light color changing request carries the second light color information; and displaying the control option corresponding to the first smart light according to the second light color information.

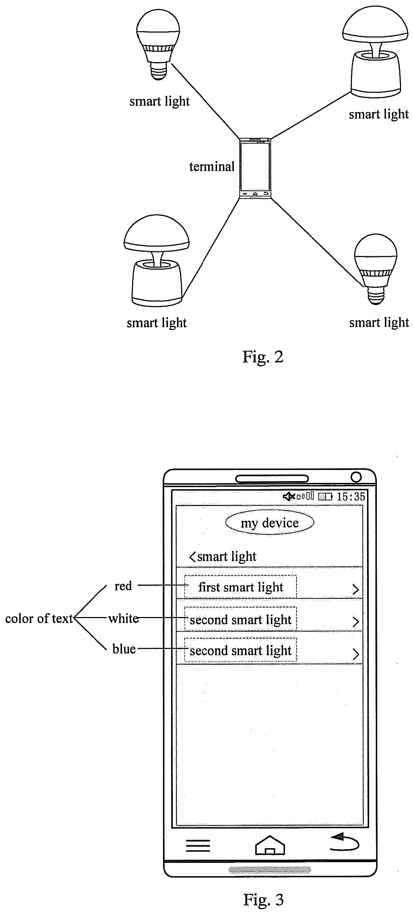

In an embodiment, as shown in Fig. 2, multiple light colors may be pre-stored in the terminal. When the user opens multiple smart lights including the first smart light simultaneously, the multiple smart lights broadcast the device open notifications simultaneously, in which each device open notification carries the light color information. If the terminal has already received the device open notification of another smart light before receiving the device open notification sent by the first smart light, the terminal may obtain the received light color information corresponding to the other smart light after obtaining the first light color information of the first smart light. If the light color information of the other smart light contains the first light color information, the light color pre-stored in the terminal is obtained, and then the light color information other than the received light color information of the other smart light received is determined to be the second light color information, and the light color changing request is generated. Then, the light color changing request is sent to the first smart light according to the obtained address information of the first smart light, in which the light color changing request carries the second light color information. The terminal may display the control option corresponding to the first smart light in the second light color corresponding to the second light color information.

In an embodiment, the first smart light may change the light color to a light color specified by the terminal. The corresponding process may be: receiving a color changing request sent by the terminal, in which the color changing request carries the second light color information; and changing the light color to a light color corresponding to the second light color information.

In an embodiment, after receiving the light color changing request sent by the terminal, the first smart light may analyze the light color changing request to obtain the second light color information from the light color changing request, and further obtain the second light color corresponding to the second light color information, and then change the light color to the second light color. For example, the current light color of the first smart light is white, the second light color corresponding to the second light color information obtained by the first smart light is red and blue, and then the first smart light may change the light color of itself from white to red and blue.

In an embodiment, the terminal controls the first smart light to change light color. The corresponding process is: if the light color information carried in the device open notification sent by another smart light is received and the light color information received contains the first light color information, sending the light color changing request to the first smart light, in which the light color changing request carries the light color information carried in the device open notification sent by the other smart light; receiving a second light color information sent by the first smart light; and displaying the control option corresponding to the first smart light according to the second light color information.

In an embodiment, as shown in Fig. 2, when the user turns on the multiple smart lights including the first smart light simultaneously, the multiple smart lights broadcast the device open notifications simultaneously, in which each device open notification carries the light color information. If the terminal has received the device open notification of another smart light before receiving the device open notification sent by the first smart light, the terminal may obtain the received light color information of the other smart light and generate the light color changing request after obtaining the first light color information of the first smart light, and then send the light color changing request to the first smart light according to the address information of the first smart light. The light color changing request carries the received light color information of the other smart light and the address information of the terminal, etc.

In an embodiment, the first smart light changes the light color of itself to a light color other than a light color corresponding to the light color information of another smart light received by the terminal. The corresponding process is: receiving a color changing request sent by the terminal, in which the color changing request carries light color information of other smart lights; changing the light color to a light color other than light colors corresponding to the light color information of other smart lights, and determining second light color information corresponding to the light color after changing; and sending the second light color information to the terminal.

In an embodiment, after receiving the light color changing request sent by the terminal, the first smart light may analyze the light color changing request, obtain the light color information of other smart lights received by the terminal, and determine the light colors corresponding to the light color information of other smart lights received by the terminal. Then, the first smart light may obtain the pre-stored light color information, choose the light color other than the light colors corresponding to the light color information of other smart lights as the second light color, and change the light color of itself from the first light color to the second light color. Then, the first smart light determines the second light color information corresponding to the second light color after changing, and send the second light color information to the terminal according to the obtained address information of the terminal. For example, the light colors corresponding to the light color information of other smart lights obtained by the first smart light include red, yellow, red and blue, and white. Then, the light color may be changed to red and blue, the second light color information corresponding to red and blue is determined, and then the second light color information is sent to the terminal.

In an embodiment, the terminal may set a color of text in the control option as the light color of the first smart light. The corresponding process may be: displaying the control option corresponding to the first smart light, and setting a color of text in the control option as a color corresponding to the second light color information.

In an embodiment, as shown in Fig. 3, after determining the second light color corresponding to the second light color information, the terminal sets the color of text in the control option corresponding to the first smart light as the second light color, and then displays the control option of the first smart light in an interface, such that the smart light may be corresponding to the control option, which is convenient for the user to distinguish. For example, the terminal determines that the light color corresponding to the second light color is red, and then the color of text in the control option displayed in the interface is red.

In addition, if the terminal determines that the second light color corresponding to the second light color information of the first smart light includes multiple colors, the color of the text in the control option is not changed when the control option is displayed, and the second light color is displayed at a certain location adjacent to the control option. For example, the second light color corresponding to the second light color information is red and blue. When the control option is displayed, the terminal displays a color box (e.g. the upper half of the box is red and the lower half of the box is blue, the upper half of the circle is red and the lower half of the circle is blue, etc.) on the left side of the control option.

In step 105, when an executing instruction of a target function triggered by the control option corresponding to the first smart light is received, a control request corresponding to the target function is sent to the first smart light.

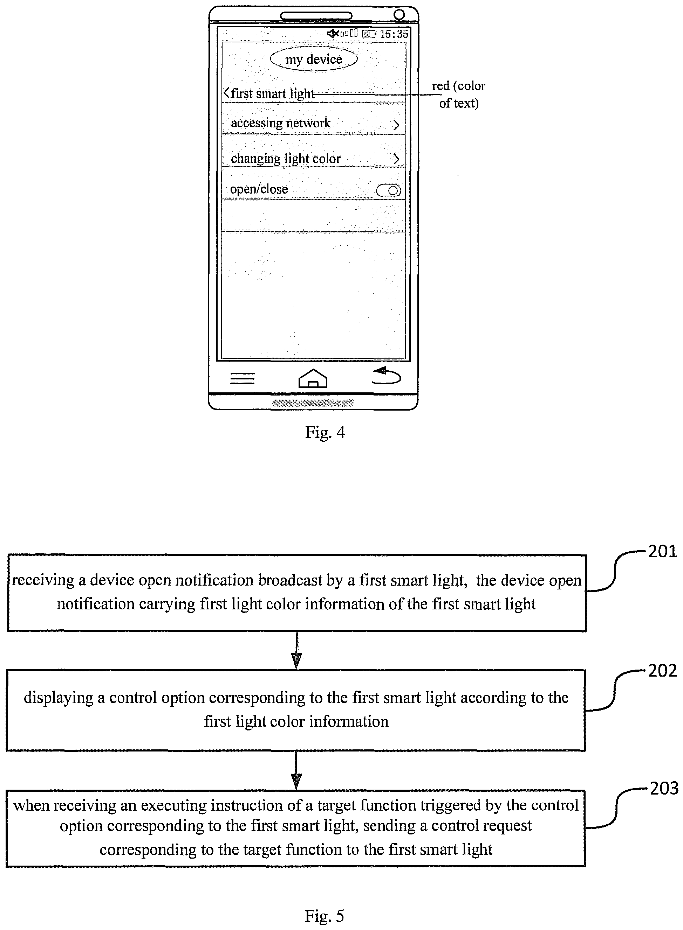

In an embodiment, as shown in Fig. 4, after receiving the second light color information of the first smart light, the terminal may display the control option (e.g. a light color changing option, a network accessing option, etc.) of the first smart light in the interface. Each control option is corresponding to one target option, e.g. the network accessing option is corresponding to a function of controlling the smart light to access the network, and the light color changing option is corresponding to a function of changing the light color of the smart light, etc. When a click instruction on a control option is received from a user, the terminal may obtain the target function corresponding to the control option, and then send the control request corresponding to the target function to the first smart light via a private protocol according to the address information of the first smart light.

In an embodiment, the terminal controls the first smart light to access the network. The corresponding process is:
when receiving an executing instruction of a target function triggered by the control option corresponding to the first smart light, obtaining a network identifier inputted by a user, and sending a network access request to the first smart light, in which the network access request carries the network identifier.

In an embodiment, the terminal displays the control option of the first smart light in the interface. The control option includes an open/close option, a light color changing option, and a network accessing option, etc. If the user wants to control the first smart light to access to the network, the user may click a button to confirm so as to trigger the terminal to display a network access interface, and the user may input an account and a password of the network and clicks a button to continue. When the terminal detects the click instruction, a network identifier (account and password of the network) input by the user may be obtained, and the address information of the first smart light is obtained. According to the address information of the first smart light, the network access request carrying the network identifier is sent to the first smart light, such that the first smart light accesses to the network corresponding to the network identifier.

In addition, the user may click the light color changing option. When receiving the click instruction, the terminal may display all of the light color options. The user may click the light color option to be changed to and trigger the terminal to send the light color changing request to the first smart light. The light color changing request carries the light color chosen by the user, such that the light color of the first smart light is changed to the light color chosen by the user.

In step 106, the control request corresponding to a target function sent by a terminal is received, and the target function is executed.

In an embodiment, after receiving the control request corresponding to the target function sent by the terminal, the first smart light may analyze the control request, obtain the target function and then execute the target function. For example, after receiving the control request corresponding to the light color changing option sent by the terminal, the first smart light may analyze the control request and then change the light color.

In an embodiment, the first smart light may access to the network. The corresponding process may be: receiving the network access request sent by the terminal, in which the network access request carries a network identifier; and accessing to a corresponding network according to the network identifier.

In an embodiment, after receiving the network access request sent by the terminal, the first smart light may analyze the network access request, obtain the network identifier and then access to the network corresponding to the network identifier. After the first smart light is accessed to the network, the terminal and the first smart light may communicate with each other using the network.

In the embodiments of the present disclosure, as shown in Fig. 5, the process performed by the terminal in the method includes steps as follows.

In step 201, a device open notification broadcast by a first smart light is received, in which the device open notification carries first light color information of the first smart light.

In step 202, a control option corresponding to the first smart light is displayed according to the first light color information.

In step 203, when an executing instruction of a target function triggered by the control option corresponding to the first smart light is received, a control request corresponding to the target function is sent to the first smart light.

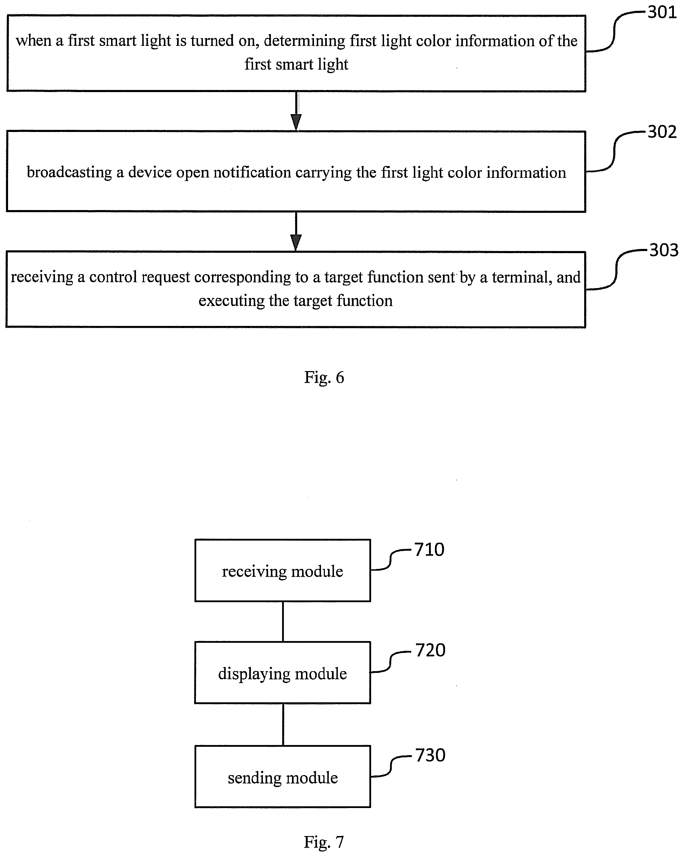

As shown in Fig. 6, the process performed by the first smart light in the method includes steps as follows.

In step 301, when the first smart light is turned on, first light color information of the first smart light is determined.

In step 302, a device open notification carrying the first light color information is broadcast.

In step 303, the control request corresponding to a target function sent by a terminal is received, and the target function is executed.

In the present embodiments, when the first smart light is turned on, the first light color information of the first smart light is determined, the device open notification carrying the first light color information is broadcast, the device open notification broadcast by the first smart light is received, in which the device open notification carries the first light color information of the first smart light; the control option corresponding to the first smart light is displayed according to the first light color information; and when the executing instruction of the target function triggered by the control option corresponding to the first smart light is received, a control request corresponding to the target function is sent to the first smart light, the control request corresponding to the target function sent by the terminal is received, and the target function is executed. In this way, when multiple smart lights are turned on simultaneously, since the first smart light carries the first light color information in the device open notification, the device open notification may be displayed with difference by the terminal according to the first light color information, and the user may find the smart light to be controlled directly according to the color, such that the efficiency of controlling the smart light may be improved.

According to another embodiment of the present disclosure, a terminal is further provided. As shown in Fig. 7, the terminal includes: a receiving module 710, a displaying module 720 and a sending module 730.

The receiving module 710 is configured to receive a device open notification broadcast by a first smart light, in which the device open notification carries first light color information of the first smart light.

The displaying module 720 is configured to display a control option corresponding to the first smart light according to the first light color information.

The sending module 730 is configured to send a control request corresponding to the target function to the first smart light when an executing instruction of a target function triggered by the control option corresponding to the first smart light is received.

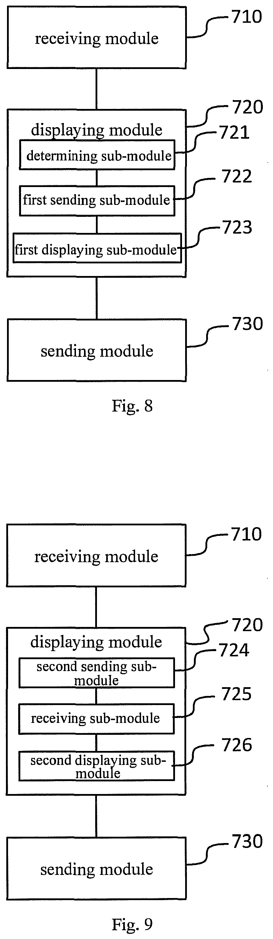

In an embodiment, as shown in Fig. 8, the displaying module 720 includes a determining sub-module 721, a first sending sub-module 722 and a first displaying sub-module 723.

The determining sub-module 721 is configured to determine second light color information other than light color information carried in the device open notification sent by another smart light if the light color information carried in the device open notification sent by another smart light is received and the light color information received contains the first light color information.

The first sending sub-module 722 is configured to send a light color changing request to the first smart light, in which the light color changing request carries the second light color information.

The first displaying sub-module 723 is configured to display the control option corresponding to the first smart light according to the second light color information.

In an embodiment, as shown in Fig. 9, the displaying module 720 includes a second sending sub-module 724, a receiving sub-module 725, and a second displaying sub-module 726.

The second sending sub-module 724 is configured to send a light color changing request to the first smart light if light color information carried in the device open notification sent by another smart light is received and the light color information received contains the first light color information, in which the light color changing request carries the light color information carried in the device open notification sent by the other smart light.

The receiving sub-module 725 is configured to receive the second light color information sent by the first smart light.

The second displaying sub-module 726 is configured to display the control option corresponding to the first smart light according to the second light color information.

In an embodiment, the displaying module 720 is configured to:
display the control option corresponding to the first smart light, and set a color of text in the control option as a color corresponding to the second light color information.

In an embodiment, the sending module 730 is configured to:
obtain a network identifier inputted by a user and send a network access request to the first smart light when an executing instruction of a target function triggered by the control option corresponding to the first smart light is received, in which the network access request carries the network identifier.

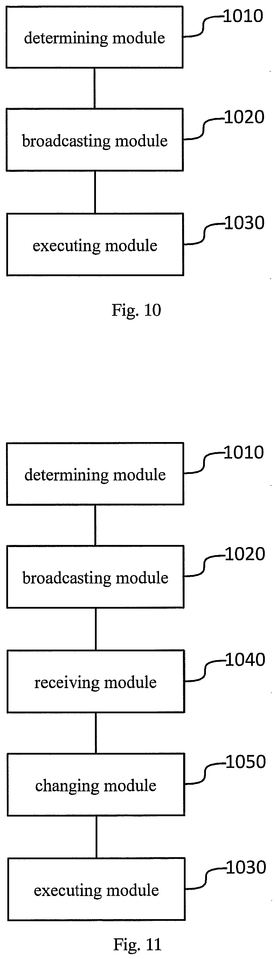

Based on the similar technical thought, embodiments of the present disclosure further provide a first smart light. As shown in Fig. 10, the first smart light includes: a determining module 1010, a broadcasting module 1020 and an executing module 1030.

The determining module 1010 is configured to determine first light color information of the first smart light when a first smart light is turned on.

The broadcasting module 1020 is configured to broadcast a device open notification carrying the first light color information.

The executing module 1030 is configured to receive a control request corresponding to a target function sent by a terminal, and execute the target function.

In an embodiment, as shown in Fig. 11, the first smart light further includes: a receiving module 1040 and a changing module 1050.

The receiving module 1040 is configured to receive a color changing request sent by the terminal, in which the color changing request carries second light color information.

The changing module 1050 is configured to change a light color of the first smart light to a light color corresponding to the second light color information.

In an embodiment, the receiving module 1040 is further configured to receive a color changing request sent by the terminal, in which the color changing request carries light color information of other smart lights.

The changing module 1050 is further configured to change the light color of the first smart light to a light color other than light colors corresponding to the light color information of other smart lights, and to determine the second light color information corresponding to the light color after changing.

The second light color information is sent to the terminal.

In an embodiment, the receiving module 1040 is configured to receive a network access request sent by the terminal, in which the network access request carries a network identifier.

The executing module 1030 is configured to access to a corresponding network according to the network identifier.

In the present embodiments, when the first smart light is turned on, the first light color information of the first smart light is determined, the device open notification carrying the first light color information is broadcast, the device open notification broadcast by the first smart light is received, in which the device open notification carries the first light color information of the first smart light; the control option corresponding to the first smart light is displayed according to the first light color information; and when the executing instruction of the target function triggered by the control option corresponding to the first smart light is received, a control request corresponding to the target function is sent to the first smart light, the control request corresponding to the target function sent by the terminal is received, and the target function is executed. In this way, when the multiple smart lights are turned on simultaneously, since the first smart light carries the first light color information in the device open notification, the device open notification may be displayed with difference by the terminal according to the first light color information, and the user may find the smart light to be controlled directly according to the color, such that the efficiency of controlling the smart light may be improved.

With respect to the terminal and the first smart light in the above embodiments, the specific operation modes of individual modules therein have been described in detail in the embodiments regarding the methods, which will not be elaborated herein.

It should be noted that, for the terminal for controlling the smart light and the first smart light for controlling the smart light provided in the above embodiments, only examples of the above function modules with divided functions are described. In an actual implementation, the above functions may be allocated to different function modules according to requirements, i.e. the inner structure of the device is divided into different function modules so as to complete all of or a part of functions described above. In addition, embodiments of the method for controlling the smart light, the terminal for controlling the smart light and the first smart light belong to a single technical thought, and the specific realization process may refer to the method embodiments, which shall not be elaborated herein.

According to another embodiment of the present disclosure, a system for controlling a smart light is provided. The system includes a terminal and a first smart light.

The terminal is configured to receive a device open notification broadcast by a first smart light, in which the device open notification carries first light color information of the first smart light; display a control option corresponding to the first smart light according to the first light color information; and send a control request corresponding to the target function to the first smart light when receiving an executing instruction of the target function triggered by control option corresponding to the first smart light.

The smart light is configured to determine first light color information of the first smart light when a first smart light is turned on; broadcast the device open notification carrying the first light color information; and receive the control request corresponding to the target function sent by the terminal and execute the target function.

In the present embodiments, when the first smart light is turned on, the first light color information of the first smart light is determined, the device open notification carrying the first light color information is broadcast, the device open notification broadcast by the first smart light is received, in which the device open notification carries the first light color information of the first smart light; the control option corresponding to the first smart light is displayed according to the first light color information; and when the executing instruction of the target function triggered by control option corresponding to the first smart light is received, a control request corresponding to the target function is sent to the first smart light, the control request corresponding to the target function sent by the terminal is received, and the target function is executed. In this way, when the multiple smart lights are turned on simultaneously, since the first smart light carries the first light color information in the device open notification, the device open notification may be displayed with difference by the terminal according to the first light color information, and the user may find the smart light to be controlled directly according to the color, such that the efficiency of controlling the smart light may be improved.

According to yet another embodiment of the present disclosure, a block diagram of a terminal is provided. The terminal may be a cellphone, and a tablet computer, etc.

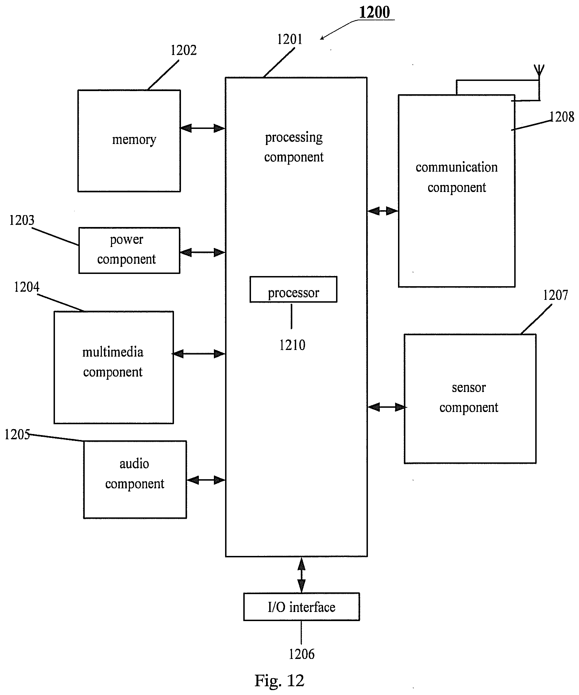

Referring to Fig. 12, the terminal 1200 may include the following one or more components: a processing component 1201, a memory 1202, a power component 1203, a multimedia component 1204, an audio component 1205, an Input/Output (I/O) interface 1206, a sensor component 1207, and a communication component 1208.

The processing component 1201 typically controls overall operations of the terminal 1200, such as the operations associated with display, telephone calls, data communications, camera operations, and recording operations. The processing component 1201 may include one or more processors 1210 to execute instructions to perform all or part of the steps in the above described methods. Moreover, the processing component 1201 may include one or more modules which facilitate the interaction between the processing component 1201 and other components. For instance, the processing component 1201 may include a multimedia module to facilitate the interaction between the multimedia component 1204 and the processing component 1201.

The memory 1202 is configured to store various types of data to support the operation of the terminal 1200. Examples of such data include instructions for any applications or methods operated on the terminal 1200, contact data, phonebook data, messages, pictures, video, etc. The memory 1202 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1203 provides power to various components of the terminal 1200. The power component 1203 may include a power management system, one or more power sources, and any other components associated with the generation, management, and distribution of power in the terminal 1200.

The multimedia component 1204 includes a screen providing an output interface between the terminal 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and other gestures on the touch panel. The touch sensors may not only sense a boundary of a touch or swipe action, but also sense a duration time and a pressure associated with the touch or swipe action. In some embodiments, the multimedia component 1204 includes a front camera and/or a rear camera. The front camera and the rear camera may receive external multimedia data while the terminal 1200 is in an operation mode, such as a photographing mode or a video mode. Each of the front camera and the rear camera may be a fixed optical lens system or have focus and optical zoom capability.

The audio component 1205 is configured to output and/or input audio signals. For example, the audio component 1205 includes a microphone (MIC) configured to receive an external audio signal when the intelligent device 1200 is in an operation mode, such as a call mode, a recording mode, and a voice recognition mode. The received audio signal may be further stored in the memory 1202 or transmitted via the communication component 1208.

The I/O interface 1206 provides an interface for the processing component 1201 and peripheral interface modules, such as a keyboard, a click wheel, buttons, and the like. The buttons may include, but are not limited to, a home button, a volume button, a starting button, and a locking button.

The sensor component 1207 includes one or more sensors to provide status assessments of various aspects of the terminal 1200. For instance, the sensor component 1207 may detect an open/closed status of the terminal 1200 and relative positioning of components (e.g. the display and the keypad of the terminal 1200). The sensor component 1207 may also detect a change in position of the terminal 1200 or of a component in the terminal 1200, a presence or absence of user contact with the terminal 1200, an orientation or an acceleration/deceleration of the terminal 1200, and a change in temperature of the terminal 1200. The sensor component 1207 may include a proximity sensor configured to detect the presence of nearby objects without any physical contact. The sensor component 1207 may also include a light sensor, such as a CMOS or CCD image sensor, for use in imaging applications. In some embodiments, the sensor component 1207 may also include an accelerometer sensor, a gyroscope sensor, a magnetic sensor, a pressure sensor, or a temperature sensor.

The communication component 1208 is configured to facilitate wired or wireless communication between the terminal 1200 and other devices. The terminal 1200 can access a wireless network based on a communication standard, such as WIFI, 2G, or 3G, or a combination thereof. In one exemplary embodiment, the communication component 1208 receives a broadcast signal or broadcast associated information from an external broadcast management system via a broadcast channel. In one exemplary embodiment, the communication component 1208 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the terminal 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer readable storage medium including instructions, such as the memory 1202 including instructions. The above instructions are executable by the processor 1210 in the terminal 1200, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium is provided. When the instructions in the memory are executed by the processor in the terminal, the terminal may execute a method for controlling the smart light, and the method includes:
receiving a device open notification broadcast by a first smart light, in which the device open notification carries first light color information of the first smart light;
displaying a control option corresponding to the first smart light according to the first light color information; and
when receiving an executing instruction of a target function triggered by control option corresponding to the first smart light, sending a control request corresponding to the target function to the first smart light.

In another embodiment, displaying a control option corresponding to the first smart light according to the first light color information includes:
if light color information carried in the device open notification sent by another smart light is received and the light color information received contains the first light color information, determining second light color information other than the light color information carried in the device open notification sent by the other smart light;
sending a light color changing request to the first smart light, in which the light color changing request carries the second light color information; and
displaying the control option corresponding to the first smart light according to the second light color information.

In another embodiment, displaying a control option corresponding to the first smart light according to the first light color information includes:
if light color information carried in the device open notification sent by another smart light is received and the light color information received contains the first light color information, sending a light color changing request to the first smart light, in which the light color changing request carries the light color information carried in the device open notification sent by the other smart light;
receiving the second light color information sent by the first smart light; and
displaying the control option corresponding to the first smart light according to the second light color information.

In another embodiment, displaying the control option corresponding to the first smart light according to the second light color information includes:
displaying the control option corresponding to the first smart light, and setting a color of text in the control option as a color corresponding to the second light color information.

In another embodiment, sending a control request corresponding to the target function to the first smart light when receiving an executing instruction of a target function triggered by control option corresponding to the first smart light includes:
when receiving the executing instruction of the target function triggered by the control option corresponding to the first smart light, obtaining a network identifier inputted by a user, and sending a network access request to the first smart light, in which the network access request carries the network identifier.

In the present embodiments, when the first smart light is turned on, the first light color information of the first smart light is determined, the device open notification carrying the first light color information is broadcast, the device open notification broadcast by the first smart light is received, in which the device open notification carries the first light color information of the first smart light; the control option corresponding to the first smart light is displayed according to the first light color information; and when the executing instruction of the target function triggered by control option corresponding to the first smart light is received, a control request corresponding to the target function is sent to the first smart light, the control request corresponding to the target function sent by the terminal is received, and the target function is executed. In this way, when the multiple smart lights are turned on simultaneously, since the first smart light carries the first light color information in the device open notification, the device open notification may be displayed with difference by the terminal according to the first light color information, and the user may find the smart light to be controlled directly according to the color, such that the efficiency of controlling the smart light may be improved.

According to yet still another embodiment of the present disclosure, a block diagram of a smart light is provided.

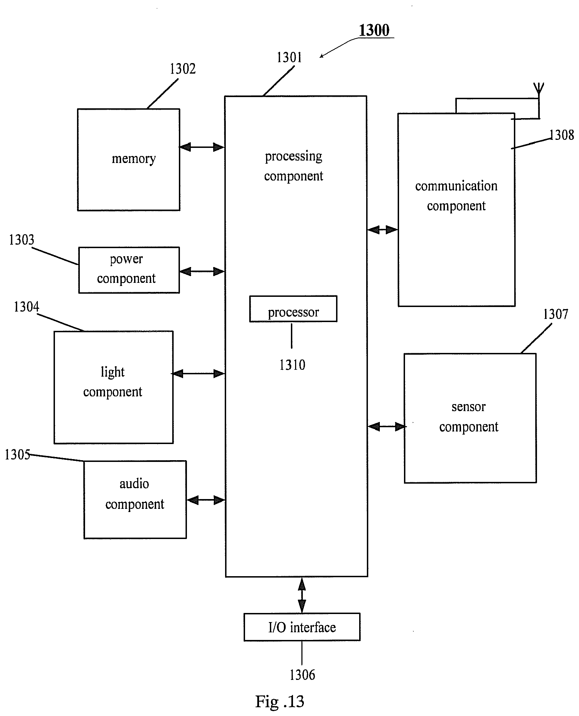

Referring to Fig. 13, the smart light 1300 may include the following one or more components: a processing component 1301, a memory 1302, a power component 1303, a light component 1304, an audio component 1305, an Input/Output (I/O) interface 1306, a sensor component 1307, and a communication component 1308.

The processing component 1301 typically controls overall operations of the smart light 1300, such as the operations associated with display, telephone calls, data communications, camera operations, and recording operations. The processing component 1301 may include one or more processors 1310 to execute instructions to perform all or part of the steps in the above described methods. Moreover, the processing component 1301 may include one or more modules which facilitate the interaction between the processing component 1301 and other components.

The memory 1302 is configured to store various types of data to support the operation of the smart light 1300. Examples of such data include instructions for any applications or methods operated on the smart light 1300, contact data, phonebook data, messages, pictures, video, etc. The memory 1302 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1303 provides power to various components of the smart light 1300. The power component 1303 may include a power management system, one or more power sources, and any other components associated with the generation, management, and distribution of power in the smart light 1300.

The light component 1304 may control the light color of the smart light 1300.

The audio component 1305 is configured to output and/or input audio signals. The received audio signal may be further stored in the memory 1302 or transmitted via the communication component 1308.

The I/O interface 1306 provides an interface for the processing component 1301 and peripheral interface modules.

The sensor component 1307 includes one or more sensors to provide status assessments of various aspects of the smart light 1300. For instance, the sensor component 1307 may detect a change in position of the smart light 1300 or of a component in the smart light 1300, a presence or absence of user contact with the smart light 1300, an orientation or an acceleration/deceleration of the smart light 1300, and a change in temperature of the smart light 1300. The sensor component 1307 may include a proximity sensor configured to detect the presence of nearby objects without any physical contact.

The communication component 1308 is configured to facilitate wired or wireless communication between the smart light 1300 and other devices. The smart light 1300 can access a wireless network based on a communication standard, such as WIFI. In one exemplary embodiment, the communication component 1308 receives a broadcast signal or broadcast associated information from an external broadcast management system via a broadcast channel. In one exemplary embodiment, the communication component 1308 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the smart light 1300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer readable storage medium including instructions, such as the memory 1302 including instructions. The above instructions are executable by the processor 1310 in the smart light 1300, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium is provided. When the instructions in the memory are executed by the processor in the smart light, the smart light may execute a method for controlling the smart light, and the method includes:
when a first smart light is turned on, determining first light color information of the first smart light;
broadcasting a device open notification carrying the first light color information; and
receiving a control request corresponding to a target function sent by a terminal, and executing the target function.

In another embodiment, the method further includes:
receiving a color changing request sent by the terminal, in which the color changing request carries second light color information; and
changing a light color to a light color corresponding to the second light color information.

In another embodiment, the method further includes:
receiving a color changing request sent by the terminal, in which the color changing request carries light color information of another smart light;
changing a light color to a light color other than a light color corresponding to the light color information of the other smart light, and determining second light color information corresponding to the light color after changing; and
sending the second light color information to the terminal.

In another embodiment, receiving a control request corresponding to a target function sent by a terminal, and executing the target function includes:
receiving network access request sent by the terminal, in which the network access request carries a network identifier; and
accessing to a corresponding network according to the network identifier.

In the present embodiments, when the first smart light is turned on, the first light color information of the first smart light is determined, the device open notification carrying the first light color information is broadcast, the device open notification broadcast by the first smart light is received, in which the device open notification carries the first light color information of the first smart light; the control option corresponding to the first smart light is displayed according to the first light color information; and when the executing instruction of the target function triggered by control option corresponding to the first smart light is received, a control request corresponding to the target function is sent to the first smart light, the control request corresponding to the target function sent by the terminal is received, and the target function is executed. In this way, when the multiple smart lights are turned on simultaneously, since the first smart light carries the first light color information in the device open notification, the device open notification may be displayed with difference by the terminal according to the first light color information, and the user may find the smart light to be controlled directly according to the color, such that the efficiency of controlling the smart light may be improved.

## Claims

1. A method for controlling a first smart light, the method being implemented in a terminal, the method comprising:
receiving (201) a first device open notification broadcasted by the first smart light, wherein the first device open notification carries first light color information of the first smart light; displaying (202), on an interface of the terminal, a control option corresponding to the first smart light according to the first light color information,
**characterized in that** the method further comprises:
receiving a light color information carried in a second device open notification sent by a second smart light, wherein said light color information contains said first light color information,
determining second light color information other than said light color information carried in the second device open notification;
sending a light color changing request to the first smart light, wherein the light color changing request carries said second light color information;
displaying, on the interface of the terminal, the control option corresponding to the first smart light according to the second light color information, and setting a color of text in the control option as a color corresponding to the second light color information; and
receiving an executing instruction of a target function to be triggered by the control option corresponding to the first smart light and sending (203) a control request corresponding to the target function to the first smart light.

2. A method for controlling a first smart light, the method being implemented in a terminal, the method comprising:
receiving (201) a first device open notification broadcasted by the first smart light, wherein the first device open notification carries first light color information of the first smart light;
displaying (202), on an interface of the terminal, a control option corresponding to the first smart light according to the first light color information,
**characterized in that** the method further comprises:
receiving a light color information carried in a second device open notification sent by a second smart light, wherein said light color information contains said first light color information,
sending a light color changing request to the first smart light, wherein the light color changing request carries the light color information carried in the second device open notification;
receiving second light color information sent by the first smart light;
displaying, on the interface of the terminal, the control option corresponding to the first smart light according to the second light color information, and setting a color of text in the control option as a color corresponding to the second light color information; and
receiving an executing instruction of a target function to be triggered by the control option corresponding to the first smart light and sending (203) a control request corresponding to the target function to the first smart light.

3. The method according to claim 1 or 2, wherein, sending (203) the control request corresponding to the target function to the first smart light comprises:
obtaining a network identifier inputted by a user, and sending a network access request to the first smart light, wherein the network access request carries the network identifier.

4. A method for controlling a first smart light, the method being implemented in the first smart light, the method comprising:
when the first smart light is turned on, determining (301) first light color information of the first smart light;
broadcasting (302) a first device open notification carrying the first light color information; **characterized in that** the method further comprises:
receiving, from a terminal, a color changing request, wherein the color changing request carries light color information of a second smart light;
changing a light color of the first smart light to a second light color other than a light color corresponding to the light color information of the second smart light, and determining second light color information corresponding to the second light color;
sending the second light color information to the terminal,
receiving (303), from the terminal, a control request corresponding to a target function, and
executing the target function.

5. The method according to claim 4, wherein, receiving, from the terminal, a control request corresponding to a target function and executing the target function comprises:
receiving, from the terminal, a network access request, wherein the network access request carries a network identifier; and
accessing to a corresponding network according to the network identifier.

6. A terminal, comprising:
a receiving module (710), configured to receive a first device open notification broadcasted by a first smart light, wherein the first device open notification carries first light color information of the first smart light;
a displaying module (720), configured to display a control option corresponding to the first smart light according to the first light color information;
**characterized in that**:
the receiving module (710) is configured to receive a second device open notification from a second smart light, the second device open notification carrying light color information containing the first light color information;
the displaying module (720) comprises:
a determining sub-module (721), configured to determine second light color information other than the light color information carried in the second device open notification;
a first sending sub-module (722), configured to send a light color changing request to the first smart light, wherein the light color changing request carries the second light color information; and
a displaying sub-module (723, 726), configured to display the control option corresponding to the first smart light according to the second light color information, and set a color of text in the control option as a color corresponding to the second light color information;
the receiving module (710) is further configured to receive an executing instruction of a target function to be triggered by the control option corresponding to the first smart light; and
the terminal further comprises:
a sending module (730), configured to send a control request corresponding to the target function to the first smart light.

7. A terminal, comprising:
a receiving module (710), configured to receive a first device open notification broadcasted by a first smart light, wherein the first device open notification carries first light color information of the first smart light;
a displaying module (720), configured to display a control option corresponding to the first smart light according to the first light color information;
**characterized in that**:
the receiving module (710) is configured to receive a second device open notification from a second smart light, the second device open notification carrying light color information containing the first light color information;
the displaying module (720) comprises:
a second sending sub-module (724), configured to send a light color changing request to the first smart light, wherein the light color changing request carries said light color information carried in said second device open notification;
a receiving sub-module (725), configured to receive second light color information sent by the first smart light; and
a displaying sub-module (723, 726), configured to display the control option corresponding to the first smart light according to the second light color information, and set a color of text in the control option as a color corresponding to the second light color information;
the receiving module (710) is further configured to receive an executing instruction of a target function to be triggered by the control option corresponding to the first smart light; and
the terminal further comprises:
a sending module (730), configured to send a control request corresponding to the target function to the first smart light.

8. The terminal according to claim 6 or 7, wherein, the sending module (730) is configured to:
obtain a network identifier inputted by a user and send a network access request to the first smart light as the control request, wherein the network access request carries the network identifier.

9. A first smart light, comprising:
a determining module (1010), configured to determine first light color information of the first smart light when the first smart light is turned on;
a broadcasting module (1020), configured to broadcast a first device open notification carrying the first light color information; and
**characterized in that** said first smart light further comprises:
a receiving module (1040), configured to receive, from a terminal, a color changing request, wherein the color changing request carries light color information of a second smart light;
a changing module (1050), configured to change a light color of the first smart light to a second light color other than a light color corresponding to the light color information of the second smart light, and to determine second light color information corresponding to the second light color; and
a sending module, configured to send the second light color information to the terminal; and
an executing module (1030), configured to receive, from the terminal, a control request corresponding to a target function, and to execute the target function.

10. The first smart light according to claim 9, wherein
the receiving module (1040) is configured to receive, from the terminal, a network access request, wherein the network access request carries a network identifier; and
the executing module (1030) is configured to access to a corresponding network according to the network identifier.

11. A system for controlling a smart light, comprising:
a terminal according to any of claims 6 to 7; and
a first smart light according to claim 9.

## Patentansprüche

1. Verfahren zur Steuerung einer ersten intelligenten Leuchte, wobei das Verfahren in einem Endgerät implementiert ist, das Verfahren umfassend:
Empfangen (201) einer ersten Geräteöffnungsmeldung, die von der ersten intelligenten Leuchte rundgesendet wird, wobei die erste Geräteöffnungsmeldung eine erste Lichtfarbeninformation der ersten intelligenten Leuchte trägt,
Anzeigen (202), auf einer Schnittstelle des Endgeräts, einer Steuerungsoption, die der ersten intelligenten Leuchte entspricht, gemäß der ersten Lichtfarbeninformation,
**dadurch gekennzeichnet, dass** das Verfahren ferner umfasst:
Empfangen einer Lichtfarbeninformation, die in einer zweiten Geräteöffnungsmeldung enthalten ist, die von einer zweiten intelligenten Leuchte gesendet wird, wobei die Lichtfarbeninformation die erste Lichtfarbeninformation enthält,
Bestimmen einer zweiten Lichtfarbeninformation, die sich von der in der zweiten Geräteöffnungsmeldung enthaltenen Lichtfarbeninformation unterscheidet,
Senden einer Lichtfarbenänderungsanforderung an die erste intelligente Leuchte, wobei die Lichtfarbenänderungsanforderung die zweite Lichtfarbeninformation trägt,
Anzeigen der Steueroption, die der ersten intelligenten Leuchte entspricht, auf der Schnittstelle des Endgeräts gemäß der zweiten Lichtfarbeninformation und Einstellen einer Textfarbe in der Steueroption als eine Farbe, die der zweiten Lichtfarbeninformation entspricht, und
Empfangen einer Ausführungsanweisung einer Zielfunktion, die durch die der ersten intelligenten Leuchte entsprechende Steueroption ausgelöst werden soll, und Senden (203) einer der Zielfunktion entsprechenden Steueranforderung an die erste intelligente Leuchte.

2. Verfahren zur Steuerung einer ersten intelligenten Leuchte, wobei das Verfahren in einem Endgerät implementiert ist, das Verfahren umfassend:
Empfangen (201) einer ersten Geräteöffnungsmeldung, die von der ersten intelligenten Leuchte rundgesendet wird, wobei die erste Geräteöffnungsmeldung eine erste Lichtfarbeninformation der ersten intelligenten Leuchte trägt,
Anzeigen (202), auf einer Schnittstelle des Endgeräts, einer Steuerungsoption, die der ersten intelligenten Leuchte entspricht, gemäß der ersten Lichtfarbeninformation,
**dadurch gekennzeichnet, dass** das Verfahren ferner umfasst:
Empfangen einer Lichtfarbeninformation, die in einer zweiten Geräteöffnungsmeldung enthalten ist, die von einer zweiten intelligenten Leuchte gesendet wird, wobei die Lichtfarbeninformation die erste Lichtfarbeninformation enthält,
Senden einer Lichtfarbenänderungsanforderung an die erste intelligente Leuchte, wobei die Lichtfarbenänderungsanforderung die in der zweiten Geräteöffnungsmeldung enthaltene Lichtfarbeninformation enthält,
Empfangen von zweiten Lichtfarbeninformationen, die von der ersten intelligenten Leuchte gesendet werden,
Anzeigen der Steueroption, die dem ersten intelligenten Licht entspricht, auf der Schnittstelle des Endgeräts gemäß der zweiten Lichtfarbeninformation und Einstellen einer Textfarbe in der Steueroption als eine Farbe, die der zweiten Lichtfarbeninformation entspricht, und
Empfangen einer Ausführungsanweisung einer Zielfunktion, die durch die der ersten intelligenten Leuchte entsprechende Steueroption ausgelöst werden soll, und Senden (203) einer der Zielfunktion entsprechenden Steueranforderung an die erste intelligente Leuchte.

3. Verfahren nach Anspruch 1 oder 2, wobei das Senden (203) der der Zielfunktion entsprechenden Steueranforderung an die erste intelligente Leuchte umfasst:
Erfassen einer von einem Benutzer eingegebenen Netzkennung und Senden einer Netzzugangsanforderung an die erste intelligente Leuchte, wobei die Netzzugangsanforderung die Netzkennung enthält.

4. Verfahren zur Steuerung einer ersten intelligenten Leuchte, wobei das Verfahren in der ersten intelligenten Leuchte implementiert ist, das Verfahren umfassend:
wenn die erste intelligente Leuchte eingeschaltet ist, Bestimmen (301) einer ersten Lichtfarbeninformation der ersten intelligenten Leuchte,
Rundsenden (302) einer ersten Geräteöffnungsmeldung, die die erste Lichtfarbeninformation trägt,
**dadurch gekennzeichnet, dass** das Verfahren ferner umfasst:
Empfangen einer Farbenänderungsanforderung von einem Endgerät, wobei die Farbenänderungsanforderung Lichtfarbeninformationen einer zweiten intelligenten Leuchte trägt,
Ändern einer Lichtfarbe der ersten intelligenten Leuchte in eine zweite Lichtfarbe, die sich von einer Lichtfarbe unterscheidet, die der Lichtfarbeninformation der zweiten intelligenten Leuchte entspricht, und Bestimmen einer zweiten Lichtfarbeninformation, die der zweiten Lichtfarbe entspricht,
Senden der zweiten Lichtfarbeninformation an das Endgerät,
Empfangen (303) einer Steueranforderung von dem Endgerät, die einer Zielfunktion entspricht, und
Ausführen der Zielfunktion.

5. Verfahren nach Anspruch 4, wobei das Empfangen einer Steueranforderung von dem Endgerät, die einer Zielfunktion entspricht, und das Ausführen der Zielfunktion umfassen:
Empfangen einer Netzzugangsanforderung von dem Endgerät, wobei die Netzzugangsanforderung eine Netzkennung trägt, und
Zugriff auf ein entsprechendes Netz gemäß der Netzkennung.

6. Endgerät, umfassend:
ein Empfangsmodul (710), das dazu konfiguriert ist, eine erste Geräteöffnungsmeldung zu empfangen, die von einer ersten intelligenten Leuchte rundgesendet wird, wobei die erste Geräteöffnungsmeldung erste Lichtfarbeninformationen der ersten intelligenten Leuchte trägt,
ein Anzeigemodul (720), das dazu konfiguriert ist, eine der ersten intelligenten Leuchte entsprechende Steueroption gemäß der ersten Lichtfarbeninformation anzuzeigen,
**dadurch gekennzeichnet, dass**
das Empfangsmodul (710) dazu konfiguriert ist, eine zweite Geräteöffnungsmeldung von einer zweiten intelligenten Leuchte empfangen, wobei die zweite Geräteöffnungsmeldung Lichtfarbeninformationen trägt, die die ersten Lichtfarbeninformationen enthalten,
das Anzeigemodul (720) umfasst:
ein Bestimmungsuntermodul (721), das dazu konfiguriert ist, zweite Lichtfarbeninformationen zu bestimmen, die sich von den Lichtfarbeninformationen unterscheiden, die in der zweiten Geräteöffnungsmeldung enthalten sind,
ein erstes Sendeuntermodul (722), das dazu konfiguriert ist, eine Lichtfarbenänderungsanforderung an die erste intelligente Leuchte zu senden, wobei die Lichtfarbenänderungsanforderung die zweite Lichtfarbeninformation trägt, und
ein Anzeigeuntermodul (723, 726), das dazu konfiguriert ist, die Steueroption, die der ersten intelligenten Leuchte entspricht, gemäß der zweiten Lichtfarbeninformation anzuzeigen und eine Textfarbe in der Steueroption als eine Farbe einzustellen, die der zweiten Lichtfarbeninformation entspricht,
wobei das Empfangsmodul (710) ferner dazu konfiguriert ist, eine Ausführungsanweisung einer Zielfunktion zu empfangen, die durch die der ersten intelligenten Leuchte entsprechende Steueroption ausgelöst werden soll, und
wobei das Endgerät ferner umfasst:
ein Sendemodul (730), das dazu konfiguriert ist, eine der Zielfunktion entsprechende Steueranforderung an die erste intelligente Leuchte zu senden.

7. Endgerät, umfassend:
ein Empfangsmodul (710), das dazu konfiguriert ist, eine erste Geräteöffnungsmeldung empfangen, die von einer ersten intelligenten Leuchte rundgesendet wird, wobei die erste Geräteöffnungsmeldung erste Lichtfarbeninformationen der ersten intelligenten Leuchte trägt,
ein Anzeigemodul (720), das dazu konfiguriert ist, eine der ersten intelligenten Leuchte entsprechende Steueroption gemäß der ersten Lichtfarbeninformation anzuzeigen,
**dadurch gekennzeichnet, dass**
das Empfangsmodul (710) dazu konfiguriert ist, eine zweite Geräteöffnungsmeldung von einer zweiten intelligenten Leuchte empfangen, wobei die zweite Geräteöffnungsmeldung Lichtfarbeninformationen trägt, die die ersten Lichtfarbeninformationen enthalten,
das Anzeigemodul (720) umfasst:
ein zweites Sendeuntermodul (724), das dazu konfiguriert ist, eine Lichtfarbenänderungsanforderung an die erste intelligente Leuchte zu senden, wobei die Lichtfarbenänderungsanforderung die Lichtfarbeninformationen trägt, die in der zweiten Geräteöffnungsmeldung enthalten sind,
ein Empfangsuntermodul (725), das dazu konfiguriert ist, zweite Lichtfarbeninformationen zu empfangen, die von der ersten intelligenten Leuchte gesendet werden, und
ein Anzeigeuntermodul (723, 726), das dazu konfiguriert ist, die Steueroption, die der ersten intelligenten Leuchte entspricht, gemäß der zweiten Lichtfarbeninformation anzuzeigen und eine Textfarbe in der Steueroption als eine Farbe einzustellen, die der zweiten Lichtfarbeninformation entspricht,
das Empfangsmodul (710) ferner dazu konfiguriert ist, eine Ausführungsanweisung einer Zielfunktion zu empfangen, die durch die der ersten intelligenten Leuchte entsprechende Steueroption ausgelöst werden soll, und
das Endgerät ferner umfasst:
ein Sendemodul (730), das dazu konfiguriert ist, eine der Zielfunktion entsprechende Steueranforderung an die erste intelligente Leuchte zu senden.

8. Endgerät nach Anspruch 6 oder 7, wobei das Sendemodul (730) dazu konfiguriert ist:
eine von einem Benutzer eingegebene Netzkennung zu erhalten und eine Netzzugangsanforderung an die erste intelligente Leuchte als die Steuerungsanforderung zu senden, wobei die Netzzugangsanforderung die Netzkennung trägt.

9. Erste intelligente Leuchte, umfassend:
ein Bestimmungsmodul (1010), das dazu konfiguriert ist, erste Lichtfarbeninformationen der ersten intelligenten Leuchte zu bestimmen, wenn die erste intelligente Leuchte eingeschaltet ist,
ein Rundsendemodul (1020), das dazu konfiguriert ist, eine erste Geräteöffnungsmeldung rund zu senden, die die erste Lichtfarbeninformation trägt, und
**dadurch gekennzeichnet, dass** die erste intelligente Leuchte ferner umfasst:
ein Empfangsmodul (1040), das dazu konfiguriert ist, von einem Endgerät eine Farbenänderungsanforderung zu empfangen, wobei die Farbenänderungsanforderung Lichtfarbeninformationen einer zweiten intelligenten Leuchte trägt,
ein Änderungsmodul (1050), das dazu konfiguriert ist, eine Lichtfarbe der ersten intelligenten Leuchte in eine zweite Lichtfarbe zu ändern, die sich von einer Lichtfarbe unterscheidet, die den Lichtfarbeninformationen der zweiten intelligenten Leuchte entspricht, und zweite Lichtfarbeninformationen zu bestimmen, die der zweiten Lichtfarbe entsprechen, und
ein Sendemodul, das dazu konfiguriert ist, die zweite Lichtfarbeninformation an das Endgerät zu senden, und
ein Ausführungsmodul (1030), das dazu konfiguriert ist, von dem Endgerät eine Steueranforderung zu empfangen, die einer Zielfunktion entspricht, und die Zielfunktion ausführt.

10. Erste intelligente Leuchte nach Anspruch 9, wobei
das Empfangsmodul (1040) dazu konfiguriert ist, von dem Endgerät eine Netzzugangsanforderung zu empfangen, wobei die Netzzugangsanforderung eine Netzkennung trägt, und
das Ausführungsmodul (1030) dazu konfiguriert ist, entsprechend der Netzkennung auf ein entsprechendes Netz zuzugreifen.

11. System zur Steuerung einer intelligenten Leuchte, umfassend:
ein Endgerät nach einem der Ansprüche 6 bis 7 und
eine erste intelligente Leuchte nach Anspruch 9.

## Revendications

1. Procédé pour commander une première lampe intelligente, le procédé étant mis en oeuvre dans un terminal, le procédé comprenant :
la réception (201) d'une première notification de dispositif ouvert diffusée par la première lampe intelligente, dans lequel la première notification de dispositif ouvert transporte des premières informations de couleur de lumière de la première lampe intelligente ;
l'affichage (202), sur une interface du terminal, d'une option de commande correspondant à la première lampe intelligente en fonction des premières informations de couleur de lumière,
**caractérisé en ce que** le procédé comprend en outre :
la réception d'une information de couleur de lumière transportée dans une deuxième notification de dispositif ouvert envoyée par une deuxième lampe intelligente, dans lequel ladite information de couleur de lumière contient lesdites premières informations de couleur de lumière,
la détermination de deuxièmes informations de couleur de lumière différentes desdites informations de couleur de lumière transportées dans la deuxième notification de dispositif ouvert ;
l'envoi d'une demande de changement de couleur de lumière à la première lampe intelligente, dans lequel la demande de changement de couleur de lumière transporte lesdites deuxièmes informations de couleur de lumière ;
l'affichage, sur l'interface du terminal, de l'option de commande correspondant à la première lampe intelligente en fonction des deuxièmes informations de couleur de lumière, et le réglage d'une couleur de texte dans l'option de commande en tant que couleur correspondant aux deuxièmes informations de couleur de lumière ; et
la réception d'une instruction d'exécution d'une fonction cible destinée à être déclenchée par l'option de commande correspondant à la première lampe intelligente et l'envoi (203) d'une demande de commande correspondant à la fonction cible à la première lampe intelligente.

2. Procédé pour commander une première lampe intelligente, le procédé étant mis en oeuvre dans un terminal, le procédé comprenant :
la réception (201) d'une première notification de dispositif ouvert diffusée par la première lampe intelligente, dans lequel la première notification de dispositif ouvert transporte des premières informations de couleur de lumière de la première lampe intelligente ;
l'affichage (202), sur une interface du terminal, d'une option de commande correspondant à la première lampe intelligente en fonction des premières informations de couleur de lumière,
**caractérisé en ce que** le procédé comprend en outre :
la réception d'une information de couleur de lumière transportée dans une deuxième notification de dispositif ouvert envoyée par une deuxième lampe intelligente, dans lequel ladite information de couleur de lumière contient lesdites premières informations de couleur de lumière,
l'envoi d'une demande de changement de couleur de lumière à la première lampe intelligente, dans lequel la demande de changement de couleur de lumière transporte les informations de couleur de lumière transportées dans la deuxième notification de dispositif ouvert ;
la réception des deuxièmes informations de couleur de lumière envoyées par la première lampe intelligente ;
l'affichage, sur l'interface du terminal, de l'option de commande correspondant à la première lampe intelligente en fonction des deuxièmes informations de couleur de lumière, et le réglage d'une couleur de texte dans l'option de commande en tant que couleur correspondant aux deuxièmes informations de couleur de lumière ; et
la réception d'une instruction d'exécution d'une fonction cible destinée à être déclenchée par l'option de commande correspondant à la première lampe intelligente et l'envoi (203) d'une demande de commande correspondant à la fonction cible à la première lampe intelligente.

3. Procédé selon la revendication 1 ou 2, dans lequel l'envoi (203) de la demande de commande correspondant à la fonction cible à la première lampe intelligente comprend :
l'obtention d'un identifiant de réseau entré par un utilisateur, et l'envoi d'une demande d'accès au réseau à la première lampe intelligente, dans lequel la demande d'accès au réseau transporte l'identifiant de réseau.

4. Procédé de commande d'une première lampe intelligente, le procédé étant mis en oeuvre dans la première lampe intelligente, le procédé comprenant :
lorsque la première lampe intelligente est allumée, la détermination (301) des premières informations de couleur de lumière de la première lampe intelligente ;
la diffusion (302) d'une première notification de dispositif ouvert transportant les premières informations de couleur de lumière, **caractérisé en ce que** le procédé comprend en outre :
la réception, d'un terminal, d'une demande de changement de couleur, dans lequel le changement d'une couleur de lumière de la première lampe intelligente en une deuxième couleur de lumière différente d'une couleur de lumière correspondant aux informations de couleur de lumière de la deuxième lampe intelligente, et
la détermination de deuxièmes informations de couleur de lumière correspondant à la deuxième couleur de lumière ;
l'envoi des deuxièmes informations de couleur de lumière au terminal,
la réception (303), du terminal, d'une demande de commande correspondant à une fonction cible, et
l'exécution de la fonction cible.

5. Procédé selon la revendication 4, dans lequel la réception, du terminal, d'une demande de commande correspondant à une fonction cible et l'exécution de la fonction cible comprend :
la réception, du terminal, d'une demande d'accès au réseau, dans lequel la demande d'accès au réseau transporte un identifiant de réseau ; et
l'accès à un réseau correspondant en fonction de l'identifiant de réseau.

6. Terminal, comprenant :
un module de réception (710), configuré pour recevoir une première notification de dispositif ouvert diffusée par une première lampe intelligente, dans lequel la première notification de dispositif ouvert transporte des premières informations de couleur de lumière de la première lampe intelligente ;
un module d'affichage (720), configuré pour afficher une option de commande correspondant à la première lampe intelligente en fonction des premières informations de couleur de lumière ;
**caractérisé en ce que** :
le module de réception (710) est configuré pour recevoir une deuxième notification de dispositif ouvert d'une deuxième lampe intelligente, la deuxième notification de dispositif ouvert transportant des informations de couleur de lumière contenant les premières informations de couleur de lumière ;
le module d'affichage (720) comprend :
un sous-module de détermination (721), configuré pour déterminer des deuxièmes informations de couleur de lumière différentes des premières informations de couleur de lumière transportées dans la deuxième notification de dispositif ouvert ;
un premier sous-module d'envoi (722), configuré pour envoyer une demande de changement de couleur de lumière à la première lampe intelligente, dans lequel la demande de changement de couleur de lumière transporte les deuxièmes informations de couleur de lumière ; et
un sous-module d'affichage (723, 726), configuré pour afficher l'option de commande correspondant à la première lampe intelligente en fonction des deuxièmes informations de couleur de lumière, et régler une couleur de texte dans l'option de commande en tant que couleur correspondant aux deuxièmes informations de couleur de lumière ;
le module de réception (710) est configuré en outre pour recevoir une instruction d'exécution d'une fonction cible destinée à être déclenchée par l'option de commande correspondant à la première lampe intelligente ; et
le terminal comprend en outre :
un module d'envoi (730), configuré pour envoyer une deuxième demande correspondant à la fonction cible à la première lampe intelligente.

7. Terminal, comprenant :
un module de réception (710), configuré pour recevoir une première notification de dispositif ouvert diffusée par une première lampe intelligente, dans lequel la première notification de dispositif ouvert transporte des premières informations de couleur de lumière de la première lampe intelligente ;
un module d'affichage (720), configuré pour afficher une option de commande correspondant à la première lampe intelligente en fonction des premières informations de couleur de lumière ;
**caractérisé en ce que** :
le module de réception (710) est configuré pour recevoir une deuxième notification de dispositif ouvert d'une deuxième lampe intelligente, la deuxième notification de dispositif ouvert transportant des informations de couleur de lumière contenant les premières informations de couleur de lumière ;
le module d'affichage (720) comprend :
un deuxième sous-module d'envoi (724), configuré pour envoyer une demande de changement de couleur de lumière à la première lampe intelligente, dans lequel la demande de changement de couleur de lumière transporte lesdites informations de couleur de lumière transportées dans ladite deuxième notification de dispositif ouvert ;
un sous-module de réception (725), configuré pour recevoir des deuxièmes informations de couleur de lumière envoyées par la première lampe intelligente ; et
un sous-module d'affichage (723, 726), configuré pour afficher l'option de commande correspondant à la première lampe intelligente en fonction des deuxièmes informations de couleur de lumière, et régler une couleur de texte dans l'option de commande en tant que couleur correspondant aux deuxièmes informations de couleur de lumière ;
le module de réception (710) est configuré en outre pour recevoir une instruction d'exécution d'une fonction cible destinée à être déclenchée par l'option de commande correspondant à la première lampe intelligente ; et
le terminal comprend en outre :
un module d'envoi (730), configuré pour envoyer une demande de commande correspondant à la fonction cible à la première lampe intelligente.

8. Terminal selon la revendication 6 ou 7, dans lequel le module d'envoi (730) est configuré pour :
obtenir un identifiant de réseau entré par un utilisateur et envoyer une demande d'accès au réseau à la première lampe intelligente en tant que demande de commande, dans lequel la demande d'accès au réseau transporte l'identifiant de réseau.

9. Première lampe intelligente, comprenant :
un module de détermination (1010), configuré pour déterminer des premières informations de couleur de lumière de la première lampe intelligente lorsque la première lampe intelligente est allumée ;
un module de diffusion (1020), configuré pour diffuser une première notification de dispositif ouvert transportant les premières informations de couleur de lumière ; et
**caractérisée en ce que** ladite première lampe intelligente comprend :
un module de réception (1040), configuré pour recevoir, d'un terminal, une demande de changement de couleur, dans laquelle la demande de changement de couleur transporte des informations de couleur de lumière d'une deuxième lampe intelligente ;
un module de changement (1050), configuré pour changer une couleur de lumière de la première lampe intelligente en une deuxième couleur de lumière différente d'une couleur de lumière correspondant aux informations de couleur de lumière de la deuxième lampe intelligente, et pour déterminer des deuxièmes informations de couleur de lumière correspondant à la deuxième couleur de lumière ; et
un module d'envoi, configuré pour envoyer les deuxièmes informations de couleur de lumière au terminal ; et
un module d'exécution (1030), configuré pour recevoir, du terminal, une demande de commande correspondant à une fonction cible, et pour exécuter la fonction cible.

10. Première lampe intelligente selon la revendication 9, dans laquelle
le module de réception (1040) est configuré pour recevoir, du terminal, une demande d'accès au réseau, dans laquelle la demande d'accès au réseau transporte un identifiant de réseau ; et
le module d'exécution (1030) est configuré pour accéder à un réseau correspondant en fonction de l'identifiant de réseau.

11. Système pour commander une lampe intelligente, comprenant :
un terminal selon l'une quelconque des revendications 6 à 7 ; et
une première lampe intelligente selon la revendication 9.
